# EUROPÄISCHE PATENTANMELDUNG

(11) **EP 4 602 914 A1**
(43) Veröffentlichungstag der Anmeldung: **20.08.2025**
(21) Anmeldenummer: 25156267.4
(22) Anmeldetag: 06.02.2025
(51) Int. Cl.: A01K 5/00, B01F 27/9212

(54) **FUTTERMISCHBEHÄLTER**

(30) Priorität: 13.02.2024 DE 102024103942
(71) Anmelder: Mayer Verwaltungs GmbH & Co. KG, 84529 Tittmoning (DE)
(72) Erfinder: Huber, Konrad, 83329 Waging am See (DE)
(74) Vertreter: Flach Bauer & Partner Patentanwälte mbB

(57) **Zusammenfassung**

Vorliegend wird ein Futtermischbehälter und einen Futtermischwagen beschrieben. Der Futtermischbehälter umfasst einen Boden und eine sich vom Boden aus nach oben erstreckenden Umfangswand. Die Umfangswand weist einen vorderen Umfangswandabschnitt (210), einen hinteren Umfangswandabschnitt (220), einen ersten seitlichen Umfangswandabschnitt (230) und einen zweiten seitlichen Umfangswandabschnitt (240) auf. Der vordere Umfangswandabschnitt (210) und/oder der hintere Umfangswandabschnitt (220) umfassen zumindest ein Wandelement sowie zwei Eckelemente. Das zumindest eine Wandelement ist plattenförmig und schließt mit einer horizontalen Querrichtung (R) einen Winkel ein, der im Bereich von ≥0° bis ≤30° liegt.

## Beschreibung

### Gebiet der Erfindung

Die Erfindung betrifft einen Futtermischbehälter sowie eine stationäre Futtermischeinrichtung und einen Futtermischwagen mit einem derartigen Futtermischbehälter.

### Hintergrund

Stationäre Futtermischeinrichtungen und Futtermischwägen sind landwirtschaftliche Maschinen, die dazu verwendet werden, Futtermittel (Tierfutter) zu mischen und im Falle von Futtermischwägen auch zu verteilen. Diese Maschinen sind besondere in der Viehhaltung verbreitet, wo eine genaue und ausgewogene Ernährung der Tiere (beispielsweise bei Rindern) wichtig ist.

Bekannte Futtermischwägen können mittels einer Zugmaschine (z.B. ein Traktor) gezogen werden, oder selbstfahrend sein. Zur Aufnahme und zum Transport von Futtermitteln umfassen bekannte Futtermischwägen einen sogenannten Futtermischbehälter.

Der Futtermischbehälter ist der Teil des Futtermischwagens, in dem die verschiedenen Futterbestandteile gemischt werden. Mögliche Futterbestandteile sind beispielsweise Heu, Silage, Getreide, Mineralstoffe und andere Nährstoffe, die für eine ausgewogene Ernährung der Tiere benötigt werden.

Durch das Mischen der verschiedenen Futterbestandteile wird sichergestellt, dass eine homogene Futtermittel-Mischung erzeugt wird und alle Tiere die gleiche Mischung und mithin die notwendigen Nährstoffe erhalten. Dies trägt dazu bei, die Gesundheit der Tiere zu fördern und den Ertrag, beispielsweise die Milchproduktion bei Milchkühen oder das Wachstum bei Masttieren, zu optimieren.

Darüber hinaus ermöglichen Futtermischwagen eine effiziente Verteilung des Futtermittels, wodurch Zeit und Arbeitskraft eingespart werden können.

Bekannte Futtermischwägen zeigen oftmals eine nur ungenügende Durchmischung und/oder weisen eine lange Mischdauer auf, um eine ausreichende Durchmischung der Futterbestandteile zu erreichen.

Weiterhin zeigt sich, dass die Menge an benötigtem Futtermittel steigt, da die landwirtschaftlichen Produktionsbetriebe mehr Tiere halten und mithin ein höherer Futtermittelbedarf entsteht.

### Zusammenfassung

Der Erfindung liegt die Aufgabe zugrunde, einen Futtermischbehälter sowie einen Futtermischwagen bereitzustellen, der die vorgenannten Nachteile zumindest teilweise überwindet. Zudem soll der Futtermischbehälter einfach und kostengünstig zu fertigen sein.

Diese Aufgabe wird erfindungsgemäß durch einen Futtermischbehälter und durch einen Futtermischwagen gelöst, wie diese in den unabhängigen Ansprüchen genannt sind. Weitere Aspekte der Erfindung sind in den abhängigen Ansprüchen, sowie in der nachfolgenden Beschreibung beschrieben.

Insbesondere wird die Aufgabe durch einen Futtermischbehälter für einen Futtermischwagen gelöst. Der Futtermischbehälter dient zum Aufnehmen von Futtermittel, wie beispielsweise Gras, Heu, Silage, Kraftfutter, Getreide, Futterergänzungsstoffe und/oder dergleichen.

Der Futtermischbehälter ist weiterhin dazu eingerichtet zumindest eine vertikale Mischschnecke aufzunehmen. Ebenso kann der Futtermischbehälter dazu eingerichtet sein mehrere vertikale Mischschnecken, beispielsweise 2 oder 3, aufzunehmen. Die vertikalen Mischschnecken können insbesondere in einer Reihe angeordnet sein, welche sich in Fahrtrichtung erstreckt.

Der Futtermischbehälter umfasst einen Boden und eine sich vom Boden aus nach oben erstreckenden Umfangswand. Im Boden und/oder der Umfangswand kann zumindest ein Durchbruch, insbesondere ein verschließbarer Durchbruch zur Ausgabe des Futtermittels vorgesehen sein.

Die Umfangswand weist einen vorderen Umfangswandabschnitt, einen hinteren Umfangswandabschnitt, einen ersten seitlichen Umfangswandabschnitt und einen zweiten seitlichen Umfangswandabschnitt auf. Der vordere Umfangswandabschnitt weist, sofern es sich um einen Futtermischbehälter eines Futtermischwagens, also einen Futtermischwagenbehälter handelt, in Fahrtrichtung F des Futtermischwagens, wenn der Futtermischwagenbehälter auf dem Futtermischwagen montiert ist. Der vordere Umfangswandabschnitt liegt dem hinteren Umfangswandabschnitt gegenüber und der erste seitliche Umfangswandabschnitt liegt dem zweiten seitlichen Umfangswandabschnitt gegenüber.

Die Umfangswand kann aus Metall, insbesondere Stahl, beispielsweise Chrom-Nickel-Stahl, gefertigt sein.

In einem Aspekt umfasst der vordere Umfangswandabschnitt zumindest ein Wandelement sowie zwei Eckelemente. In einem anderen Aspekt umfasst der hintere Umfangswandabschnitt zumindest ein Wandelement sowie zwei Eckelemente. Ebenso ist es möglich, dass sowohl der vordere als auch der hintere Umfangswandabschnitt zumindest ein Wandelement sowie zwei Eckelemente umfasst. Umfasst nur der vordere Umfangswandabschnitt oder nur der hintere Umfangswandabschnitt zumindest ein Wandelement sowie zwei Eckelemente, kann der entsprechend gegenüberliegende Umfangswandabschnitt anders gestaltet sein, beispielsweise als Halbrund.

Ferner ist ein erstes Eckelement mit dem ersten seitlichen Umfangswandabschnitt und ein zweites Eckelement mit dem zweiten seitlichen Umfangswandabschnitt verbunden. Die Eckelemente schließen also den vorderen (und/oder den hinteren) Umfangswandabschnitt an die jeweiligen seitlichen Umfangswandabschnitte an, um so eine umlaufende Umfangswand zu schaffen.

Das zumindest eine Wandelement ist plattenförmig ausgebildet. Es weist also keine nennenswerte Biegung auf.

Zudem schließt das zumindest eine Wandelement mit einer horizontalen Richtung R, die senkrecht zu einer Mittelebene M orientiert ist einen Winkel α (bzw. β) ein, der im Bereich von ≥0° bis ≤30° liegt. Die Mittelebene M ist durch die seitlichen Umfangswandabschnitte definiert und kann insbesondere eine Symmetrieebene sein. Ist der Futtermischbehälter ein Futtermischwagenbehälter ist die horizontale Richtung R quer zur Fahrtrichtung F orientiert.

Insbesondere kann der Winkel in einem Bereich von 0° bis 25°, oder in einem Bereich von 0° bis 20°, oder in einem Bereich von 0° bis 15°, oder in einem Bereich von 0° bis 10°, oder in einem Bereich von 0° bis 5°, oder in einem Bereich von 0° bis 3°, oder im Bereich von 1° bis 2° liegen. Ist der Winkel 0°, steht das Wandelement also im Wesentlichen quer zur Mittelebene bzw. zur Fahrtrichtung. Das Wandelement kann jedoch in eine Richtung, die in der Mittelebene liegt bzw. in bzw. entgegen der Fahrtrichtung F geneigt sein (s. Winkel φ).

Durch das plattenförmige Wandelement ist es möglich, im Vergleich zu gewöhnlichen Behälterformen mit beispielsweisen halbrunden Front- bzw. Rückbereichen, ein höheres Futtermischbehältervolumen zu erzielen, ohne dabei die Breite, Länge und/oder Höhe des Futtermischbehälters verändern zu müssen. Dies ist vorteilhaft, da insbesondere die Breite und Höhe aufgrund einer oftmals gewünschten Straßenzulassung des Futtermischwagens begrenzt sind. Das gesteigerte Volumen erlaubt es größere Mengen Futtermittel aufzunehmen und mithin mit einem Mischwagen mehr Tiere zu versorgen.

Zudem erlaubt das plattenförmige Wandelement ein einfacheres Befüllen des Futtermischbehälters, da das Futter über eine im Wesentlichen gerade verlaufende Kante des zumindest einen Wandelements in den Futtermischbehälter eingefüllt werden kann. Dies ist insbesondere bei der Befüllung mittels Frontladern (bzw. entsprechenden Frontladerschaufeln, oder -zinken) und/oder mittels einer Fördereinrichtung (wie ein Förderband, oder ein Gebläse) vorteilhaft. So können beispielsweise sehr breite Schaufeln bzw. Förderbänder zur Befüllung genutzt werden, ohne das Futtermittel seitlich herunterfällt. Hierdurch kann die Befüllungsgeschwindigkeit gesteigert werden.

Weiterhin kann durch die plattenförmigen Wandelement(e) der notwendige Materialeinsatz reduziert werden, um große Behältervolumina zu erhalten. Somit können Kosten und Gewicht eingespart werden.

Zudem können die plattenförmigen Wandelemente leicht mit weiteren Teilen (Wandelementen, Eckelementen und/oder dergleichen) verbunden werden, da entsprechende Verbindungskanten der Wandelemente gerade ausgeführt sein können. Die Verbindung kann geschweißt, genietet, geschraubt, geklebt und/oder in anderer Art ausgeführt sein. Folglich kann die Verbindung günstig und verlässlich, insbesondere auch automatisiert (z.B. durch einen (Schweiß-)roboter) ausgeführt werden.

Die Eckelemente können gebogen und/oder gekantet sein. Bei einer Kantung können mehrere Kantungen nebeneinander angeordnet sein, um ein Bogenförmiges Eckelement zu erhalten. Ebenso können mehrere separate Einzelteile zu einem Eckelement verbunden (z.B. geschweißt, genietet, geschraubt, geklebt und/oder in anderer Art verbunden) werden. Das Eckelement weist vorzugsweise an einem oberen Ende einen Radius rₒ auf, der kleiner ist als ein Radius r, an einem unteren Ende des Eckelements. Der Radius rₒ kann beispielsweise in einem Bereich von 50 mm bis 1000 mm und der Radius r, in einem Bereich von 500 mm bis 2000 mm liegen. Ebenso kann der Radius r, kann beispielsweise in einem Bereich von 200 mm bis 800 mm und der Radius r, in einem Bereich von 900 mm bis 1500 mm liegen.

In einem weiteren Aspekt der Erfindung umfasst der vordere Umfangswandabschnitt und/oder der hintere Umfangswandabschnitt zumindest zwei Wandelemente. Die zumindest zwei Wandelemente sind plattenförmig. Jedes der zumindest zwei Wandelemente schließt mit der horizontalen Richtung R einen Winkel ein, der im Bereich von ≥0° bis ≤30° liegt. Insbesondere kann der Winkel in einem Bereich von 0° bis 25°, oder in einem Bereich von 0° bis 20°, oder in einem Bereich von 0° bis 15°, oder in einem Bereich von 0° bis 10°, oder in einem Bereich von 0° bis 5°, oder in einem Bereich von 0° bis 3°, oder im Bereich von 1° bis 2° liegen.

Die Wandelemente können dabei unterschiedlich orientiert sein, oder einen im wesentlichen gleichen Winkel (Winkelbetrag) mit der horizontalen Richtung einschließen. In einem Aspekt sind die Wandelemente in Bezug zu einer Mittellinie die in Fahrtrichtung orientiert ist symmetrisch angeordnet.

In einem ersten Beispiel umfasst der vordere Umfangswandabschnitt und/oder der hintere Umfangswandabschnitt zwei Wandelemente, die jeweils mit der horizontalen Richtung einen Winkel im Bereich von ≥0° bis ≤5 einschließen. Die beiden Wandelemente können unmittelbar benachbart zueinander angeordnet und miteinander verbunden sein.

In einem zweiten Beispiel umfasst der vordere Umfangswandabschnitt und/oder der hintere Umfangswandabschnitt drei Wandelemente, die jeweils mit der horizontalen Richtung einen Winkel α im Bereich von ≥0° bis ≤5 einschließen. In diesem Fall kann ein erstes Wandelement in einen Winkel α≠0, ein zweites Wandelement quer zur Fahrtrichtung und ein drittes Wandelement mit einem Winkel "-α" angeordnet sein, wobei das zweite Wandelement zwischen dem ersten und dem dritten Wandelement angeordnet und mit diesem verbunden ist.

Benachbarte Wandelemente können miteinander verbunden (z.B. geschweißt, genietet, geschraubt, geklebt und/oder in anderer Art verbunden) sein, oder sie können integral (d.h. aus einem Stück) gefertigt sein. Bei der integralen Ausführung können benachbarte Wandelemente beispielsweise aus einem Blech geformt werden, wobei die beiden Wandelemente an einer Kantung aneinanderstoßen.

Insbesondere können zwei benachbarte Wandelemente eine Kante ausbilden. Die Kante kann eine Verbindungskante (z.B. eine Schweißkante) sein, oder eine umgeformte Kante (z.B. Kantung). Die Kante verläuft vorzugsweise in einer senkrechten Ebene und weist von einer Drehachse einer vertikalen Mischschnecke weg. Von außerhalb des Futtermischbehälters betrachtet ist die Kante also konvex. Die Kante führt zu einer weiteren Erhöhung des Volumens. Zudem stabilisiert die Kante den entsprechenden Umfangswandabschnitt, sodass der Umfangswandabschnitt mit einer dünneren Wandstärke ausgeführt werden kann. Dies erlaubt die Einsparung von Material und somit von Gewicht und Kosten.

In einem Aspekt der Erfindung bildet zumindest ein Eckelement (oder zwei Eckelemente des vorderen Umfangswandabschnitts und/oder des hinteren Umfangswandabschnitts eine Mischzone aus. Hierdurch kann die Vermischung des Futtermittels verbessert werden und/oder die Mischzeit kann reduziert werden.

In der zumindest einen Mischzone ist ein radialer, horizontaler Abstand zwischen einer Drehachse einer der Mischzone zugeordneten vertikalen Mischschnecke und der Umfangswand größer als ein radialer, horizontaler Abstand zwischen der Drehachse und einem Abschnitt der Umfangswand, der durch ein Wandelement, welches unmittelbar an das Eckelement angegrenzt, gebildet wird. Das Wandelement kann ein Wandelement des vorderen Umfangswandabschnitts, des hinteren Umfangswandabschnitts oder eines seitlichen Umfangswandabschnitts sein.

In der Mischzone kann in vertikaler Richtung (nach oben) gefördertes Futtermittel radial aus der Mischschnecke ausgeworfen werden und nach unten fallen. Der sich an die Mischzone anschließende Bereich mit kleinerem Abstand zwischen Umfangswand und Drehachse führt das Futtermittel wieder der Mischschnecke zu, sodass es erneut in vertikaler Richtung nach oben gefördert wird. Somit kommt es zu einer sehr guten Vermischung.

In einem Aspekt weist zumindest ein Wandelement des vorderen Umfangswandabschnitts und/oder des hinteren Umfangswandabschnitts und/oder des ersten und/oder zweiten seitlichen Umfangswandabschnitts in einem bodennahen Bereich des Futtermischbehälters in Umfangsrichtung eine geringere Ausdehnung auf als in einem oberen Bereich. Mit anderen Worten wird das Wandelement nach oben hin breiter. Beispielsweise kann das Wandelement/die Wandelemente trapezförmig oder dreieckig sein. Die obere Ausdehnung kann beispielsweise zumindest 3x, oder zumindest 4x, oder zumindest 5x, oder zumindest 6x, oder zumindest 7x so groß sein wie die bodennahe Ausdehnung.

Somit kann auf einfache Weise ein sich nach oben weitender Futtermischbehälter bereitgestellt werden. Dies verbessert die Befüllbarkeit und das Mischen.

Weiterhin können die Wandelemente des vorderen Umfangswandabschnitts und/oder des hinteren Umfangswandabschnitts eine Oberkante bilden, welche Oberkante eine Breite aufweist, die dem 0,5-fachen bis 0,9-fachen, oder dem 0,6-fachen bis 0,7-fachen der Gesamtbreite des Futtermischbehälters entspricht. Die Breite Oberkante vereinfacht das Befüllen des Futtermischbehälters mittels Frontladern und/oder mittels Fördereinrichtungen wie Förderbändern oder Gebläsen.

In einem weiteren Aspekt ist der Futtermischbehälter zur Aufnahme von zumindest zwei (oder drei) vertikalen Mischschnecken ausgebildet. In diesem Fall kann der erste seitliche Umfangswandabschnitt ein erstes Leitelement umfassen, welches in den Futtermischbehälter zwischen den vertikalen Mischschnecken vorsteht. Entsprechend kann der zweite seitliche Umfangswandabschnitt zusätzlich oder alternativ ein zweites Leitelement umfassen, welches in den Futtermischbehälter zwischen den vertikalen Mischschnecken vorsteht, wobei das zweite Leitelement vorzugsweise dem ersten Leitelement gegenüberliegt. Das Leitelement kann aus Blech (insbesondere Stahlblech) gefertigt sein und an ein Wandelement, oder an mehrere Wandelemente des seitlichen Umfangswandabschnitts angeschweißt sein. Ebenso kann das Leitelement durch umformen gebildet werden. Das Leitelement/die Leitelemente leiten das Futtermittel in Richtung der vertikalen Mischschnecke, um die Durchmischung zu verbessern.

In einem Aspekt kann der vordere Umfangswandabschnitt und/oder der hintere Umfangswandabschnitt gegenüber der Vertikalen um einen Winkel φ geneigt sein. Der Winkel φ kann in einem Bereich von 10° bis 20°, oder in einem Bereich von 12° bis 18°, oder in einem Bereich von 14° bis 16° liegen. Die seitlichen Umfangswandabschnitte können gegenüber der Vertikalen um einen Winkel δ geneigt sein, wobei der Winkel δ in einem Bereich von 0° bis 10°, oder in einem Bereich von 3° bis 8°, oder in einem Bereich von 4° bis 5° liegen kann. In einem Aspekt kann der Winkel φ größer sein als der Winkel δ. Es hat sich gezeigt, dass diese Schrägstellung der entsprechenden Umfangswandabschnitte, zu einer guten Mischung des Futtermittels führt.

Ein einem weiteren Aspekt umfasst der Futtermischbehälter eine Umfangswanderhöhung. Die Umfangswanderhöhung schließt sich an die Umfangswand an, und zwar an einer dem Boden gegenüberliegenden Seite der Umfangswand. Die Umfangswanderhöhung erhöht also die Gesamthöhe und damit das Volumen des Futtermischbehälters. Die Höhe der Umfangswanderhöhung kann 10% - 50%, oder 15% bis 30% der Höhe der Umfangswand betragen. Weiterhin kann die Höhe der Umfangswanderhöhung kann konstant oder variabel sein. Insbesondere ist die Umfangswanderhöhung umlaufend und/oder im Wesentlichen vertikal ausgerichtet.

Die Umfangswanderhöhung kann aus dem gleichen Material wie die Umfangswand gefertigt sein und mit dieser fest verbunden sein. Ebenso kann die Umfangswand aufgesteckt sein.

Weiterhin kann der Futtermischbehälter einen Umfangswandabschluss umfassen. Der Umfangswandabschluss kann insbesondere umlaufend sein, oder nur bereichsweise ausgebildet sein. Der Umfangswandabschluss schließt sich an der Umfangswand gegenüberliegenden Seite an die Umfangswanderhöhung an.

Der Umfangswandabschluss kann in unterschiedlichen Formen ausgeprägt sein. Beispielsweise kann er im Wesentlichen vertikal ausgerichtet sein, und somit die Gesamthöhe und damit das Volumen des Futtermischbehälters weiter erhöhen. Die Höhe des Umfangswandabschlusses kann beispielsweise 5% - 30%, oder 10% bis 25% der Höhe der Umfangswand betragen.

In einem anderen Beispiel erstreckt sich der Umfangswandabschluss von der Umfangswanderhöhung nach innen und optional in vertikaler Richtung. Der Umfangswandabschluss kann im Querschnitt im Wesentlichen gerade, gebogen oder gekantet sein. Durch die Erstreckung nach innen, steht der Umfangswandabschluss nach innen über und verhindert, dass Futtermittel beim Mischen aus dem Futtermischbehälter geworfen wird.

Die Umfangswanderhöhung und/oder Umfangswandabschluss können aus einem Kunststoff, vorzugsweise einem Composite, gefertigt sind. Dies hilft Gewicht einzusparen. Der Kunststoff kann ein elastischer Kunststoff sein, sodass beim Befüllen der Futtermischbehälter durch das Aufsetzen einer Schaufel oder Fördereinrichtung nicht beschädigt wird.

Die Aufgabe wird weiterhin durch eine stationäre Futtermischeinrichtung gelöst, welche Futtermischeinrichtung zumindest eine vertikale Mischschnecke und einen Futtermischbehälter umfasst, wobei die zumindest eine vertikale Mischschnecke in dem Futtermischbehälter angeordnet ist. Der Futtermischbehälter ist wie oben beschrieben ausgebildet.

Die Aufgabe wird weiterhin durch einen Futtermischwagen gelöst, welcher ein Fahrgestell, zumindest eine vertikale Mischschnecke (oder zumindest zwei, oder zumindest drei) und einen Futtermischbehälter umfasst, wobei der Futtermischbehälter wie oben beschrieben ausgebildet ist. In dem Futtermischbehälter ist zumindest eine vertikale Mischschnecke angeordnet.

Das Fahrgestell kann ein Fahrgestell eines Anhängers sein. Der Futtermischwagen kann also ein gezogener Futtermischwagen sein.

Weiterhin kann der Futtermischwagen einen Fahrantrieb umfassen und mithin ein selbstfahrender Futtermischwagen sein. Der ein selbstfahrende Futtermischwagen kann dazu eingerichtet sein (teil-)autonom zu fahren und/oder zur manuellen Steuerung eingerichtet sein.

Optional umfasst der Futtermischwagen eine Futtermittelaufnahmevorrichtung (beispielsweise eine Silagefräse), welche dazu eingerichtet ist Futtermittel aufzunehmen und mittels einer Fördereinrichtung (beispielsweise ein Förderband oder ein Gebläse) in den Futtermischbehälter zu transportieren.

### Kurze Beschreibung der Figuren

Die Erfindung wird nachfolgend anhand der beigefügten Figuren beispielhaft näher erläutert. Es zeigen:
- Fig. 1A: eine schematische, isometrische Ansicht eines Futtermischbehälters;
- Fig. 1B: eine schematische Draufsicht des Futtermischbehälters aus Figur 1A;
- Fig. 1C: eine schematische Vorderansicht des Futtermischbehälters aus Figur 1A;
- Fig. 1D: eine schematische Seitenansicht des Futtermischbehälters aus Figur 2A;
- Fig. 2: eine schematische Draufsicht eines weiteren Futtermischbehälters;
- Fig. 3A: eine schematische, isometrische Ansicht eines weiteren Futtermischbehälters;
- Fig. 3B: eine schematische Draufsicht des Futtermischbehälters aus Figur 3A;
- Fig. 3C: eine schematische Seitenansicht des Futtermischbehälters aus Figur 3A;
- Fig. 4: eine schematische, isometrische Ansicht eines weiteren Futtermischbehälters;
- Fig. 5: eine schematische, isometrische Ansicht eines weiteren Futtermischbehälters;
- Fig. 6: eine schematische, isometrische Ansicht eines selbstfahrenden Futtermischwagens, und
- Fig. 7: eine schematische, isometrische Ansicht eines gezogenen Futtermischwagens.

### Beschreibung der Figuren

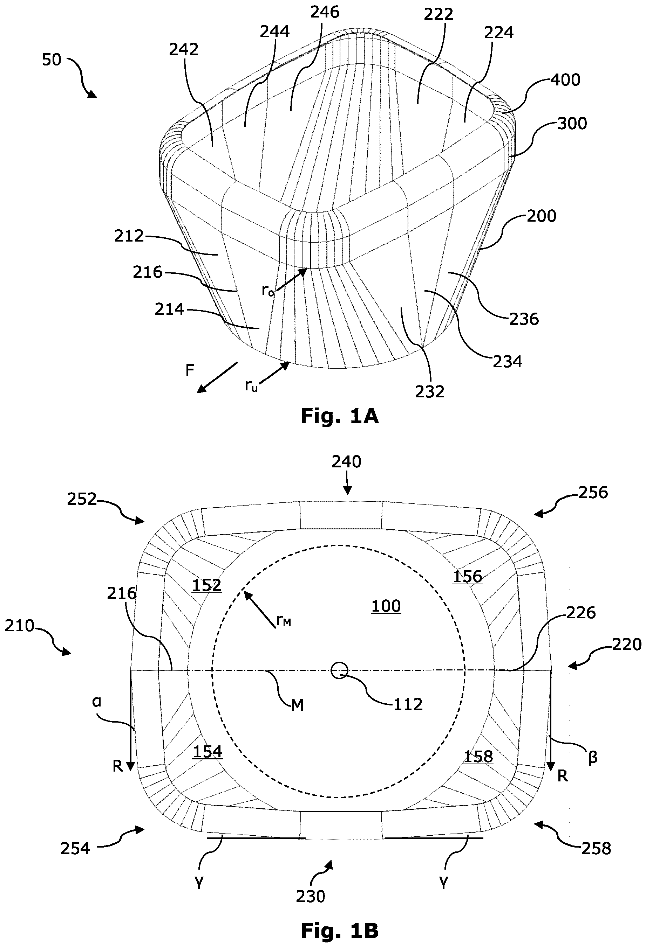

Die Figuren 1A bis 1D zeigen eine erste Ausführungsform eines erfindungsgemäßen Futtermischbehälters 50, welcher ein Futtermischwagenbehälter oder ein stationärer Futtermischbehälter sein kann.

Der Futtermischbehälter 50 umfasst einen Boden 100 und eine sich vom Boden 100 aus nach oben erstreckenden Umfangswand 200. Optional ist eine Umfangswanderhöhung 300 vorgesehen, die die Gesamthöhe des Futtermischbehälters erhöht. Auf der Umfangswanderhöhung 300 kann weiterhin ein Umfangswandabschluss 400 vorgesehen sein.

Die Umfangswand umfasst einen vorderen Umfangswandabschnitt 210, einen hinteren Umfangswandabschnitt 220, einen ersten seitlichen Umfangswandabschnitt 230 und einen zweiten seitlichen Umfangswandabschnitt 240. Die seitlichen Umfangswandabschnitte 233, 240 definieren eine Mittelebene M (s. Fig. 1B). Hier ist die Mittelebene eine Symmetrieebene.

Wie insbesondere die Figuren 1A und 1B zeigen, umfasst der vordere Umfangswandabschnitt 210 die Wandelemente 212 und 214 sowie die Eckelemente 252, 254. Der hintere Umfangswandabschnitt 220, der dem vorderen Umfangswandabschnitt 210 gegenüberliegt umfasst die Wandelemente 222 und 224 sowie die Eckelemente 256 und 258.

Die seitlichen Umfangswandabschnitt 230, 240 umfassen die Seitenwandelemente 232, 234, 236 bzw. 242, 244, 246.

Die Wandelemente 212, 214, 222, 224, 232, 234, 236, 232, 234, 236 sind plattenförmig und weisen im hier dargestellten Beispiel eine Trapezform oder eine Dreiecksform auf. Benachbarte Wandelemente können miteinander verbunden (insbesondere verschweißt, vernietet, verschraubt, verklebt und/oder dergleichen) oder integral ausgebildet sein.

Die Eckelemente sind hier jeweils mit einem seitlichen Umfangswandabschnitt 230, 240 verbunden. Die Eckelemente 252, 254, 256, 258 können gebogen oder gekantet sein, sodass sie im Wesentlichen bogenförmig sind. Weiterhin können die Eckelemente an einem oberen Ende einen Radius rₒ aufweisen, der kleiner ist als ein Radius r, an einem unteren Ende des Eckelements.

Wie insbesondere in Figur 1B (Draufsicht) gezeigt ist, ist zumindest ein Wandelement 212, 214; 222; 224 des vorderen bzw. hinteren Umfangswandabschnitts 210, 220 so ausgerichtet, dass es mit einer horizontalen Richtung R, die senkrecht zu der Mittelebene M, bzw. quer zur Fahrtrichtung F ist, einen Winkel α bzw. β einschließt, der im Bereich von ≥0° bis ≤30° liegt. Insbesondere kann der Winkel in einem Bereich von 0° bis 25°, oder in einem Bereich von 0° bis 20°, oder in einem Bereich von 0° bis 15°, oder in einem Bereich von 0° bis 10°, oder in einem Bereich von 0° bis 5°, oder in einem Bereich von 0° bis 3°, oder im Bereich von 1° bis 2° liegen. Hier beträgt der Winkel α bzw. β in etwa 3°.

Ein mittleres Seitenwandelement 234 kann im Wesentlichen in Fahrtrichtung ausgerichtet sein. Die beiden weiteren Seitenwandelemente 232 und 236 sind so ausgerichtet, dass sie mit der Fahrtrichtung F, einen Winkel γ einschließen, der im Bereich von ≥0° bis ≤5° liegt. Hier beträgt der Winkel γ in etwa 3°. Die Seitenwandelemente 242, 244 und 246 können entsprechend orientiert sein.

Wie die Figuren 1A und 1B weiter zeigen, bilden die beiden benachbarten Wandelemente 212, 214 (entsprechend 222, 224) eine Kante 216 (entsprechend 226) aus, die von einer Drehachse 112 einer vertikalen Mischschnecke (Radius r_{M}) weg weist und mithin konvex ausgebildet ist.

Die Eckelement 252, 254, 256, 258 bilden weiterhin Mischzonen 152, 154; 156, 158 aus. In der jeweiligen Mischzone 152, 154; 156, 158 ist ein radialer, horizontaler Abstand zwischen der Drehachse 112 einer zugeordneten vertikalen Mischschnecke (durch Radius r_{M} angedeutet) und der Umfangswand größer ist als ein radialer, horizontaler Abstand zwischen der Drehachse 112 und einem Abschnitt der Umfangswand 200, der durch ein Wandelement 212, 214; 222; 224, welches unmittelbar an das Eckelement 252, 254; 256, 258 angegrenzt, gebildet wird. Dies gilt insbesondere für eine Höhe über dem Boden 100 des Futtermischbehälters.

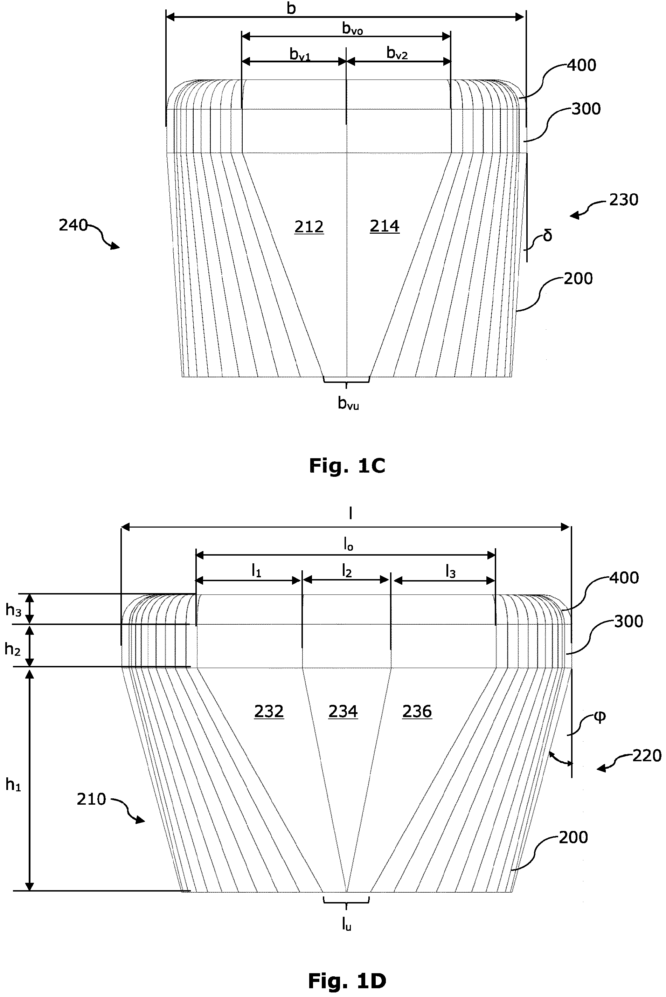

Wie in Figur 1C gezeigt ist, können die seitlichen Umfangswandabschnitte 230, 240 gegenüber der Vertikalen um einen Winkel δ geneigt sein, wobei der Winkel δ in einem Bereich von 0° bis 10°, oder in einem Bereich von 3° bis 8°, oder in einem Bereich von 4° bis 5° liegen kann.

Wie in Figur 1D gezeigt ist, können die der vordere Umfangswandabschnitt und/oder der hintere Umfangswandabschnitt gegenüber der Vertikalen um einen Winkel φ geneigt sein. Der Winkel φ kann in einem Bereich von 10° bis 20°, oder in einem Bereich von 12° bis 18°, oder in einem Bereich von 14° bis 16° liegen. Wie gezeigt ist, kann der Winkel φ größer sein als der Winkel δ.

Wie exemplarisch in Figur 1C dargestellt ist können die Wandelemente 212, 214 des vorderen Umfangswandabschnitts 210 (und/oder in gleicher Weise die Wandelemente 222, 224 des hinteren Umfangswandabschnitts 220) eine Oberkante bilden, welche Oberkante eine Breite bᵥₒ aufweist. Die Breite bᵥₒ setzt sich aus den Einzelbreiten bᵥ₁ und bᵥ₂ zusammen. Diese Breite bᵥₒ kann das 0,5-fache bis 0,9-fache, oder das 0,6-fache bis 0,7-fache der Gesamtbreite b des Futtermischbehälters 50 entsprechen. Wie ebenfalls gezeigt ist können sich die Wandelemente nach oben verbreitern, sodass die untere Breite bᵥᵤ geringer ist als bᵥₒ.

In Figur 1D sind die Längenverhältnisse und Höhenverhältnisse dargestellt. Die Umfangswand 200 weist eine Höhe h₁ auf. Die Höhe h₂ der Umfangswanderhöhung 300 kann 10% - 50%, oder 15% bis 30% der Höhe h₁ der Umfangswand 200 betragen. Die Höhe h₃ des Umfangswandabschlusses 400 kann beispielsweise 5% - 30%, oder 10% bis 25% der Höhe h₁ der Umfangswand 200 betragen.

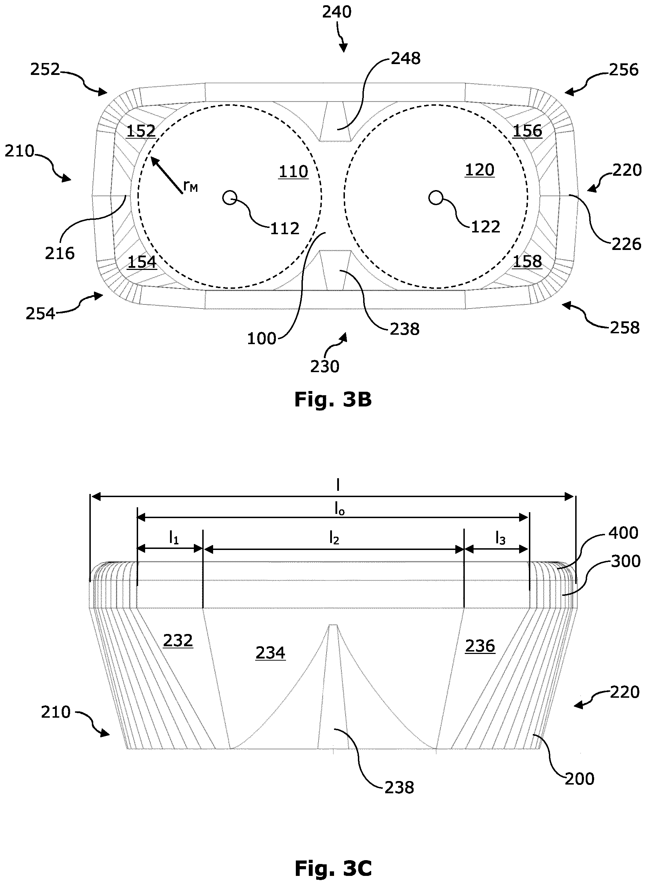

Die Länge l des Futtermischbehälters 50 ergibt sich insbesondere aus der Anzahl der vertikalen Mischschnecken, wie der Vergleich der ersten Ausführungsform (s. Figur 1D) mit der dritten Ausführungsform (s. Figur 3C) zeigt. Die Längenanpassung kann insbesondere durch eine geeignete Wahl und Dimensionierung der Seitenwandelemente 232, 234, 236 erfolgen, welche hier im oberen Bereich eine Länge l₁, l₂, l₃ aufweisen, die sich zu einer Gesamtlänge lₒ des seitlichen Umfangswandabschnitts 230 addiert. Die Gesamtlänge lₒ im oberen Bereich ist geringer als die Gesamtlänge lᵤ im unteren, bodennahen Bereich.

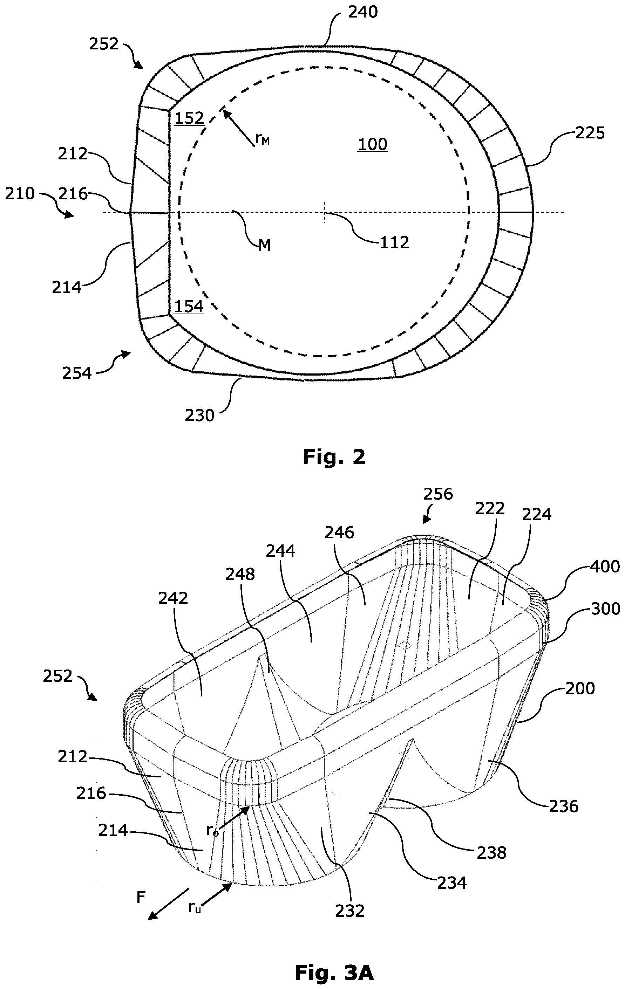

Figur 2 zeigt eine schematische Draufsicht eines weiteren Futtermischbehälters (zweite Ausführungsform), der ebenso ein Futtermischwagenbehälter sein kann. Gleiche Bezugszeichen bezeichnen hier gleiche Teile, die mit Bezug auf die Figuren 1A-1D erläutert wurden, sodass auf unnötige Wiederholungen verzichtet wird. Im Folgenden wird insbesondere auf die Unterschiede eingegangen.

Der Futtermischbehälter (zweite Ausführungsform) umfasst unterschiedlich gestaltete Umfangswandabschnitte. Während der vordere Umfangswandabschnitt 210 so gestaltet ist, wie mit Bezug auf die Figuren 1A-1D beschrieben wurde, ist der hintere Umfangswandabschnitt 225 im Wesentlichen Halbrund gestaltet. In einer weiteren, nicht dargestellten Ausführungsform kann der hintere Umfangswandabschnitt so gestaltet sein, wie in den Figuren 1A bis 1D gezeigt wurde, während der vordere Umfangswandabschnitt im Wesentlichen Halbrund gestaltet ist.

Die Figuren 3A bis 3C zeigen eine weiter Ausführungsform eines Futtermischbehälters, der ebenso ein Futtermischwagenbehälter sein kann. Gleiche Bezugszeichen bezeichnen hier gleiche Teile, die mit Bezug auf die Figuren 1A-1D erläutert wurden, sodass auf unnötige Wiederholungen verzichtet wird. Im Folgenden wird insbesondere auf die Unterschiede eingegangen.

Der in den Figuren 3A bis 3C gezeigte Futtermischbehälter ist für die Aufnahme von zwei vertikalen Mischschnecken ausgestaltet. Entsprechend sind hier zwei Drehachsen 112, 122 gezeigt. Die vertikalen Mischschnecken sind jeweils einem Bodenabschnitt 110, 120 zugeordnet und in einer Reihe angeordnet.

Um die Durchmischung zu verbessern, umfasst der erste seitliche Umfangswandabschnitt 230 ein erstes Leitelement 238, welches in den Futtermischbehälter zwischen den vertikalen Mischschnecken vorsteht und die beiden Bodenabschnitte 110, 120 trennt. Entsprechend umfasst der zweite seitliche Umfangswandabschnitt 240 ein zweites Leitelement 248, welches dem ersten Leitelement 238 gegenüberliegt.

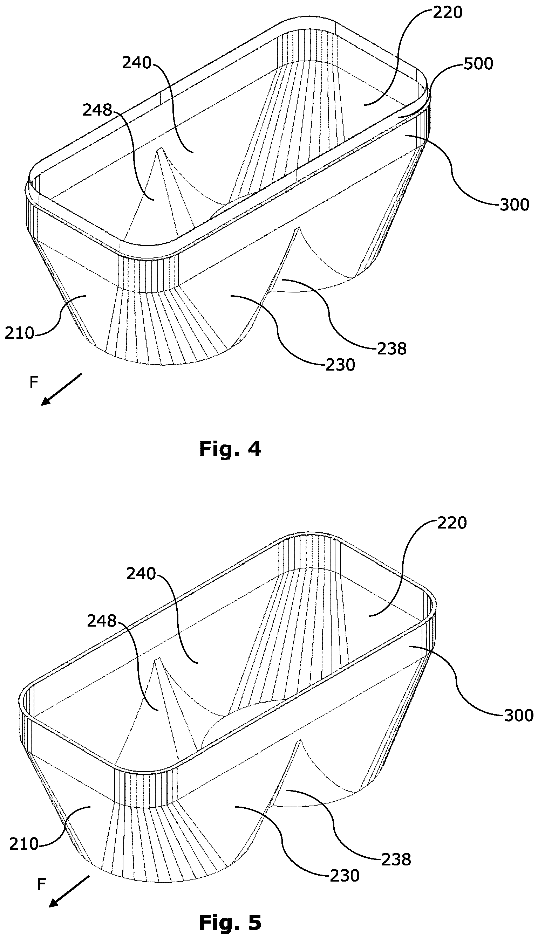

Die in den Figuren 1A-1D sowie 3A bis 3C gezeigten Futtermischbehälter umfassen einen nach innen weisenden, gebogenen Umfangswandabschluss 400 auf. Dieser ist optional. Wie Figur 4 zeigt, ist es ebenso möglich einen in vertikale Richtung weisenden Umfangswandabschluss 500 vorzusehen, oder ganz auf den Umfangswandabschluss zu verzichten (s. Figur 5).

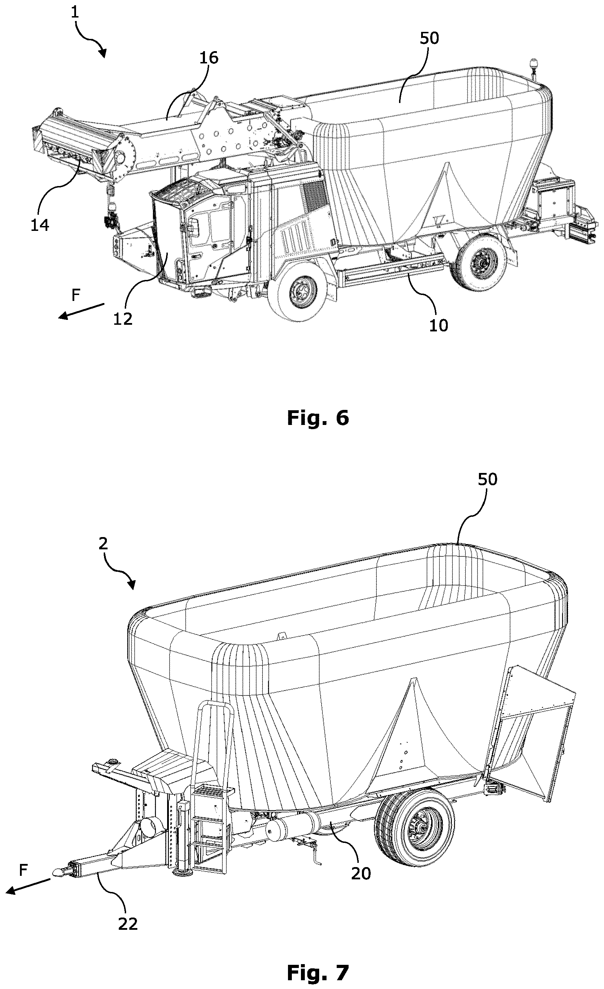

Figur 6 zeigt einen selbstfahrenden Futtermischwagen 1. Dieser umfasst den in den Figuren 3A-3C gezeigten Futtermischbehälter (bzw. Futtermischwagenbehälter) 50, sowie ein Fahrgestell 10 mit einer Fahrerkabine 12. Zudem ist eine Futtermittelaufnahmevorrichtung 14 (hier eine Silagefräse) vorgesehen. Diese ist dazu eingerichtet Silage aus einem Silagestock zu fräsen und über eine Fördereinrichtung 16 (beispielsweise ein Förderband) in den Futtermischbehälter 50 zu fördern.

Figur 7 zeigt einen gezogenen Futtermischwagen 2. Hier ist der Futtermischbehälter (bzw. Futtermischwagenbehälter) 50 auf ein Fahrgestell 20 eines Anhängers montiert. Über eine Deichsel 22 kann der Futtermischwagen 2 beispielsweise mithilfe eines Traktors (oder einer anderen Zugmaschine) gezogen werden.

### Bezugszeichenliste

- 1: Selbstfahrender Futtermischwagen
- 2: gezogener Futtermischwagen
- 10: Fahrgestell
- 12: Fahrerkabine
- 14: Futtermittelaufnahmevorrichtung (Silagefräse)
- 16: Fördereinrichtung
- 20: Fahrgestell
- 22: Deichsel
- 50: Futtermischbehälter (bzw. Futtermischwagenbehälter)
- 100: Boden
- 110: erster Bodenabschnitt
- 112: Drehachse einer vertikalen Mischschnecke
- 120: zweiter Bodenabschnitt
- 122: Drehachse einer vertikalen Mischschnecke
- 152: Mischzone
- 154: Mischzone
- 156: Mischzone
- 158: Mischzone
- 200: Umfangswand
- 210: vorderer Umfangswandabschnitt
- 212: erstes Vorderwandelement
- 214: zweites Vorderwandelement
- 216: Kante
- 220: hinterer Umfangswandabschnitt
- 222: erstes Rückwandelement
- 224: zweites Rückwandelement
- 225: hinterer Umfangswandabschnitt
- 226: Kante
- 230: erster seitlicher Umfangswandabschnitt
- 232: erstes Seitenwandelement
- 234: zweites Seitenwandelement
- 236: drittes Seitenwandelement
- 238: Leitelement
- 240: zweiter seitlicher Umfangswandabschnitt
- 242: erstes Seitenwandelement
- 244: zweites Seitenwandelement
- 246: drittes Seitenwandelement
- 248: Leitelement
- 252: Eckelement
- 254: Eckelement
- 256: Eckelement
- 258: Eckelement
- 300: Umfangswanderhöhung
- 400: Umfangswandabschluss
- 500: Umfangswandabschluss
- α: Winkel
- β: Winkel
- γ: Winkel
- δ: Winkel
- φ: Winkel
- b: Breite des Futtermischbehälters
- bᵥₒ: Breite (vorderer Umfangswandabschnitt, oberes Ende, ohne Eckelement)
- bᵥᵤ: Breite (vorderer Umfangswandabschnitt, unteres Ende, ohne Eckelement)
- bᵥ₁: Breite (erstes Vorderwandelement, oberes Ende)
- bᵥ₂: Breite (erstes Vorderwandelement, oberes Ende)
- h₁: Höhe der Umfangswand
- h₂: Höhe der Umfangswanderhöhung
- h₃: Höhe des Umfangswandabschlusses
- l: Länge des Futtermischbehälters
- lₒ: Länge (seitlicher Umfangswandabschnitt, oberes Ende)
- lᵤ: Länge (seitlicher Umfangswandabschnitt, unteres Ende)
- l₁: Breite (erstes Seitenwandelement, oberes Ende)
- l₂: Breite (zweites Seitenwandelement, oberes Ende)
- l₃: Breite (drittes Seitenwandelement, oberes Ende)
- rₒ: Radius (Eckelement, oberes Ende)
- rᵤ: Radius (Eckelement, unteres Ende)
- r_{M}: unterer Radius einer Mischschnecke
- F: Fahrtrichtung
- R: Querrichtung
- M: Mittelebene (zwischen den seitlichen Umfangswandabschnitten)

## Patentansprüche

1. Futtermischbehälter (50) für einen Futtermischwagen (1, 2) oder eine stationäre Futtermischeinrichtung, wobei
der Futtermischbehälter (50) zum Aufnehmen von Futtermittel und zumindest einer vertikalen Mischschnecke eingerichtet ist, wobei
der Futtermischbehälter (50) einen Boden (100) und eine sich vom Boden (100) aus nach oben erstreckenden Umfangswand (200) umfasst, wobei
die Umfangswand (200) einen vorderen, Umfangswandabschnitt (210), einen hinteren Umfangswandabschnitt (220), einen ersten seitlichen Umfangswandabschnitt (230) und einen zweiten seitlichen Umfangswandabschnitt (240) aufweist, wobei
der vordere Umfangswandabschnitt (210) und/oder der hintere Umfangswandabschnitt (220) zumindest ein Wandelement (212, 214; 222; 224) sowie zwei Eckelemente (252, 254; 256, 258) umfasst, wobei
ein erstes Eckelement (254, 258) mit dem ersten seitlichen Umfangswandabschnitt (230) und ein zweites Eckelement (252, 246) mit dem zweiten seitlichen Umfangswandabschnitt (240) verbunden ist, und wobei
das zumindest eine Wandelement (212, 214; 222; 224) plattenförmig ist und mit einer horizontalen Richtung (R), die senkrecht zu einer Mittelebene (M) orientiert ist, welche Mittelebene (M) durch die seitlichen Umfangswandabschnitte (230,240) definiert ist, einen Winkel (α, β) einschließt, der im Bereich von ≥0° bis ≤30° liegt.

2. Futtermischbehälter (50) nach Anspruch 1, wobei
der vordere Umfangswandabschnitt (210) und/oder der hintere Umfangswandabschnitt (220) zumindest zwei Wandelemente (212, 214; 222; 224) umfasst, wobei
die zumindest zwei Wandelemente (212, 214; 222; 224) plattenförmig sind, und wobei
jedes der zumindest zwei Wandelemente (212, 214; 222; 224) mit der horizontalen Richtung (R) einen Winkel (α, β) einschließt, der im Bereich von ≥0° bis ≤30° liegt.

3. Futtermischbehälter (50) nach Anspruch 2, wobei zwei benachbarte Wandelemente (212, 214; 222; 224) eine Kante (216, 226) ausbilden, welche Kante von einer Drehachse (112; 122) einer vertikalen Mischschnecke weg weist.

4. Futtermischbehälter (50) nach einem der Ansprüche 1 bis 3, wobei zumindest ein Eckelement (252, 254; 256, 258) des vorderen Umfangswandabschnitts (210) und/oder des hinteren Umfangswandabschnitts (220) eine Mischzone (152, 154; 156, 158) ausbildet, wobei
in der zumindest einen Mischzone (152, 154; 156, 158) ein radialer, horizontaler Abstand zwischen einer Drehachse (112; 122) einer zugeordneten vertikalen Mischschnecke und der Umfangswand größer ist als ein radialer, horizontaler Abstand zwischen der Drehachse (112; 122) und einem Abschnitt der Umfangswand (200), der durch ein Wandelement (212, 214; 222; 224), welches unmittelbar an das Eckelement (252, 254; 256, 258) angegrenzt, gebildet wird.

5. Futtermischbehälter (50) nach einem der Ansprüche 1 bis 4, wobei
zumindest ein Wandelement (212, 214; 222; 224; 232, 234, 236; 242, 244, 246) des vorderen Umfangswandabschnitts (210) und/oder des hinteren Umfangswandabschnitts (220) und/oder des ersten und/oder zweiten seitlichen Umfangswandabschnitts (230, 240) in einem bodennahen Bereich des Futtermischbehälters (50) in Umfangsrichtung eine geringere Ausdehnung aufweist als in einem oberen Bereich.

6. Futtermischbehälter (50) nach einem der Ansprüche 1 bis 5, wobei die Wandelemente (212, 214; 222; 224) des vorderen Umfangswandabschnitts (210) und/oder des hinteren Umfangswandabschnitts (220) eine Oberkante bilden, welche Oberkante eine Breite (bᵥₒ) aufweist, die dem 0,5-fachen bis 0,9-fachen der Gesamtbreite (b) des Futtermischbehälters entspricht.

7. Futtermischbehälter (50) nach einem der Ansprüche 1 bis 6, wobei der Futtermischbehälter (50) zur Aufnahme von zumindest zwei vertikalen Mischschnecken ausgebildet ist, und wobei
der erste seitliche Umfangswandabschnitt (230) ein erstes Leitelement (238) umfasst, welches in den Futtermischbehälter (50) zwischen den vertikalen Mischschnecken vorsteht, und wobei
der zweite seitliche Umfangswandabschnitt (240) optional ein zweites Leitelement (248) umfasst, welches in den Futtermischbehälter (50) zwischen den vertikalen Mischschnecken vorsteht, wobei das zweite Leitelement (248) vorzugsweise dem ersten Leitelement (238) gegenüberliegt.

8. Futtermischbehälter (50) nach einem der Ansprüche 1 bis 7, wobei der vordere Umfangswandabschnitt (210) und/oder der hintere Umfangswandabschnitt (220) gegenüber der Vertikalen um einen Winkel φ geneigt sind, und wobei die seitlichen Umfangswandabschnitte (230, 240) gegenüber der Vertikalen um einen Winkel δ geneigt sind, wobei der Winkel φ größer ist als der Winkel δ.

9. Futtermischbehälter (50) nach einem der Ansprüche 1 bis 8, wobei an einer dem Boden (100) gegenüberliegenden Seite der Umfangswand (200) sich eine umlaufende Umfangswanderhöhung (300) anschließt, wobei die Umfangswanderhöhung (300) im Wesentlichen vertikal ausgerichtet ist.

10. Futtermischbehälter (50) nach einem der Ansprüche 1 bis 9, wobei sich an einer der Umfangswand (200) gegenüberliegenden Seite der Umfangswanderhöhung (300) ein Umfangswandabschluss (400, 500) anschließt, wobei
sich der Umfangswandabschluss (400) von der Umfangswanderhöhung (300) nach innen erstreckt, oder wobei
der Umfangswandabschluss (500) im Wesentlichen vertikal ausgerichtet ist.

11. Futtermischbehälter (50) nach Anspruch 10, wobei der Umfangswandabschluss (400, 500) umlaufend ist.

12. Futtermischbehälter (50) nach einem der Ansprüche 9 bis 11, wobei die Umfangswanderhöhung (300) und/oder Umfangswandabschluss (400, 500) aus einem Kunststoff, vorzugsweise einem Composite, gefertigt sind.

13. Futtermischbehälter (50) nach einem der vorhergehenden Ansprüche, wobei das Eckelement ein gebogenes oder gekantetes Eckelement ist, und optional an einem oberen Ende einen Radius rₒ aufweist, der kleiner ist als ein Radius r, an einem unteren Ende des Eckelements.

14. Stationäre Futtermischeinrichtung, welche Futtermischeinrichtung zumindest eine vertikale Mischschnecke und einen Futtermischbehälter (50) gemäß einem der vorhergehenden Ansprüche 1 bis 13 umfasst, wobei die zumindest eine vertikale Mischschnecke in dem Futtermischbehälter (50) angeordnet ist.

15. Futtermischwagen (1, 2) umfassend ein Fahrgestell (10; 20), zumindest eine vertikale Mischschnecke und einen Futtermischbehälter (50) gemäß einem der vorhergehenden Ansprüche 1 bis 13, wobei die zumindest eine vertikale Mischschnecke in dem Futtermischbehälter (50) angeordnet ist.

16. Futtermischwagen (1) nach Anspruch 15, wobei der Futtermischwagen einen Fahrantrieb umfasst, und wobei der Futtermischwagen (1) optional eine Futtermittelaufnahmevorrichtung (14) umfasst, welche dazu eingerichtet ist Futtermittel aufzunehmen und mittels einer Fördereinrichtung (16) in den Futtermischbehälter (50) zu transportieren.
